# EUROPÄISCHE PATENTSCHRIFT

(11) **EP 0 790 288 B1**
(45) Veröffentlichungstag und Bekanntmachung des Hinweises auf die Patenterteilung: **26.04.2000**
(21) Anmeldenummer: 97101572.2
(22) Anmeldetag: 01.02.1997
(51) Int. Cl.: C09K 11/08, C09J 7/02, F21K 2/00

(54) **Langnachleuchtendes Klebeband**
Adhesive tape having a long afterglow
Ruban adhésif à phosphorescence persistante

(30) Priorität: 15.02.1996 DE 19605535
(43) Veröffentlichungstag der Anmeldung: 20.08.1997
(73) Patentinhaber: Beiersdorf Aktiengesellschaft, 20245 Hamburg (DE)
(72) Erfinder: Eikmeier, Markus, 23738 Lensahn (DE); Koops, Arne, 22083 Hamburg (DE); Lohmann, Petra, 21258 Heidenau (DE)

(56) Entgegenhaltungen:
- EP-A- 0 704 510
- DE-U- 29 515 714
- US-A- 2 333 641

## Beschreibung

Die Erfindung betrifft ein langnachleuchtendes Klebeband, wie es zur Kennzeichnung von Fluchtwegen oder Notausgängen eingesetzt wird.

Für die Sicherheitskennzeichnung am Arbeitsplatz in Gebäuden und Schiffen stehen vielfältige Kennzeichnungsmaterialien mit langnachleuchtenden Oberflächen zur Verfügung. Die Anforderungen an diese Materialien sind in der Normenreihe DIN 67510, Teil 1-4, in Deutschland beschrieben. Speziell für den Einsatz auf Schiffen existiert eine zusätzliche Forderung nach geringer Oberflächenentflammbarkeit gemäß Resolution A.653 (16) der IMO (International Maritime Organization).

Die heute eingesetzten Klebebänder haben folgenden in der DIN 67510 beschriebenen Aufbau: Hochtransparente, glatte, bedruckbare Deckschicht als UV- und Kratzschutz, Zwischenschicht aus weichgestelltem, lichtdurchlässigem Kunststoff mit eingelagerten, langnachleuchtenden Pigmenten, Unterschicht aus weichgestelltem, weißem Kunststoff, ausgerüstet mit einer alterungsbeständigen Selbstklebemasse und abgedeckt mit einem Silikontrennpapier.

Diese heute eingesetzten Klebebänder erfüllen die Forderung der DIN 67510, haben jedoch zwei entscheidende Nachteile. Zum einen ist es durch den sehr dicken und reißfesten Aufbau möglich, die Klebebänder ohne größere Probleme nach einer Montage wieder vom Untergrund abzuziehen, dadurch wird ein unbefugtes Entfernen dieser Sicherheitssysteme leicht möglich. Zum anderen bestehen diese Klebebänder den Brandtest der IMO-Resolution A.653 (16) nicht.

Der Erfindung liegt nun die Aufgabe zugrunde, ein langnachleuchtendes Klebeband zu schaffen, das die Nachteile des Standes der Technik nicht oder zumindest nicht in dem Umfang aufweist und das nicht in seiner Einsatzfähigkeit ähnlich den vorbekannten Produkten eingeschränkt ist.

Gelöst wird diese Aufgabe durch ein Klebeband, wie es in den Ansprüchen näher gekennzeichnet ist.

Das erfindungsgemäße langnachleuchtende Klebeband hat einen mehrschichtigen Aufbau.
Die erste Schicht besteht aus einem aliphatischen Polyurethanacrylat oder einem Polyesteracrylat, in die zu einem Anteil von 40 Gew.-% bis 80 Gew.-%, vorzugsweise 75 Gew.-%, ein langnachleuchtendes Pigment eingearbeitet ist. Die Schicht weist eine Dicke von 200 µm bis 800 µm, vorzugsweise 500 µm, auf. Bei dem langnachleuchtenden Pigment handelt es sich bevorzugt um Lumilux Grün N-PM der Firma Riedel de Häen oder um GSS-SA von der Firma G.B.C. Ltd.
Die zweite Schicht, die eine Dicke von 30 µm bis 150 µm, vorzugsweise 100 µm, aufweist, ist mit einem Weißpigment wie Titandioxid oder Calciumcarbonat abgemischt.
Diese zweite Schicht kann aus einem aliphatischen Polyurethanacrylat bestehen, die das Weißpigment zu einem Anteil von 20 Gew.-% bis 45 Gew.-%, vorzugsweise 40 Gew.-%, enthält. Weiterhin kann die zweite Schicht aus einem Primer, beispielsweise einem handelsüblichen Lacksystem auf PVDC-Basis, bestehen, der das Weißpigment zu einem Anteil von 60 Gew.-% bis 80 Gew.-%, vorzugsweise 70 Gew.-%, enthält. Alternativ wird die zweite Schicht von einer weißen, hochdeckenden Druckfarbe gebildet, zum Beispiel von einem kationisch aushärtenden UV-System PUR-ZK Weiß 45 der Firma Pröll.
Auf die zweite Schicht ist eine dritte Schicht aufgetragen, bestehend aus einer alterungsbeständigen Selbstklebemasse, bevorzugt aus Acrylat oder Silikon, oder einer thermisch aktivierbaren Klebfolie.

Vorteilhafterweise enthalten alle drei Schichten des erfindungsgemäßen Klebebandes ein Flammschutzmittel, und zwar zu einem Anteil von 0 Gew.-% bis 30 Gew.-%, vorzugsweise 5 Gew.-%. Alternativ kann das Flammschutzmittel aber auch nur in einer oder zwei der drei Schichten eingesetzt werden.

Als Flammschutzmittel kommen bevorzugt Ammoniumpolyphosphatverbindungen zum Einsatz, die im Handel von der Firma Hoechst zu beziehen sind. Derartige Flammschutzmittel bieten den Vorteil, daß keine Halogenverbindungen mit den bekannten Nachteilen in dem erfindungsgemäßen Klebeband Verwendung finden.
Gegebenenfalls kann die dritte Schicht, die alterungsbeständige Selbstklebemasse, mit einem antiadhäsiv beschichteten Trennmaterial, beispielsweise einem dimensionsstabilen Trennpapier oder einer Trennfolie, eingedeckt sein.

In einer bevorzugten Ausführungsform des erfindungsgemäßen Klebebandes sind die zweite Schicht und die dritte Schicht durch eine einzige Schicht ersetzt, und zwar durch eine alterungsbeständige Selbstklebemasse, abgemischt mit einem Weißpigment zu einem Anteil von 0,05 Gew.-% bis 10 Gew.-%, vorzugsweise 0,8 Gew.-% bis 2 Gew.-%.

Das erfindungsgemäße langnachleuchtende Klebeband wird bevorzugt zur Sicherheitskennzeichnung von Fluchtwegen oder Notausgängen, insbesondere auf Schiffen oder innerhalb von Gebäuden eingesetzt.
Daneben sind aber auch andere Verwendungszwecke denkbar.

Das erfindungsgemäße Klebeband ist durch eine Vielzahl von Vorteilen gekennzeichnet, die so auch für den Fachmann nicht vorherzusehen waren.

Die Elektronenstrahlen-ausgehärtete, aliphatische Polyurethanacrylatschicht bzw. Polyesterschicht besitzt einen hohen Grad an dreidimensionaler Vernetzung. Die daraus resultierende Sprödigkeit verhindert ein unbefugtes Entfemen des Sicherheitssystems; das Entfemen ist nur in kleinen Segmenten möglich.

Durch den chemischen Aufbau der Oberschicht resultiert eine hohe Licht- und UV-Beständigkeit. Außerdem wird dadurch auch eine gute Wetterbeständigkeit gewährleistet (DIN 53387). Darüber hinaus zeichnet sich das erfindungsgemäße Klebeband durch seine hohe Beständigkeit gegenüber Lösungsmitteln oder aggressiven Medien wie Säuren oder Laugen aus.

Zusätzlich bietet die aliphatische Polyurethanacrylat-oder Polyesterschicht eine kratzfeste Oberfläche, die nicht, wie in der DIN 67510-4 beschrieben, durch einen Decklack geschützt werden muß.
(DIN 52348 "Verschleißprüfung - Sandriesel - Verfahren")

Weiterhin kann die aliphatische Polyurethanacrylat- oder Polyesterschicht problemlos im Flexo-, Siebdruck- oder ähnlichen Verfahren mit handelsüblichen Druckfarben bedruckt werden.

Schließlich wird durch den vorteilhaft dünnen Produktaufbau der Brandtest der IMO-Resolution A.653 (16) erfüllt. Bei diesem Brandtest wird die Entflammbarkeit an einem 155x180 mm großen Probeträger in vertikaler Anordnung bewertet.
Im verklebten Zustand erfüllt das Klebeband auch den Entflammbarkeitstest nach US 302, und zwar mit dem Ergebnis selbstverlöschend.

Das erfindungsgemäße Klebeband ist aufgrund der genannten Vorteile hervorragend geeignet, Fluchtwege oder Notausgänge innerhalb Gebäuden oder Schiffen zu kennzeichnen.

### Beispiel

Zur Herstellung der Oberschicht werden die folgenden Rezepturbestandteile miteinander vermischt:

| | Gew.-% |
|---|---|
| Polyurethanacrylat GENOMER D 900 (Firma Rahnchemie) | 30 |
| Leuchtpigment Lumilux 50090 N-PM (Firma Riedel de Häen) | 60 |
| Reaktivverdünner DVE-3 | 10 |

Entsprechend der oben genannten Rezeptur wird der elektronenstrahlhärtende Lack aus aus Polyurethanacrylat und Reaktiwerdünner hergestellt. Unter intensivem Rühren wird anschließend das Leuchtpigment zugesetzt.

Die so hergestellte Masse wird an einem Laborstreichbalken auf eine 25 µm dicken Polyesterfolie ausgestrichen. Dabei ist der Streichspalt so eingestellt, daß die Schichtdicke 200 µm erreicht wird. Der so erhaltene Ausstrich wird mit einer Elektronenstrahldosis von 175 kGy vernetzt. Auf die Oberschicht wird eine weitere Schicht einer Mischung aus 50 Gew.-% Polyurethanacrylat, 40 Gew.-% TiO₂ und 10 Gew.-% Reaktivverdünner aufgebracht. Die Vernetzung erfolgt ebenfalls mit 175 kGy.

In einem weiteren Arbeitsgang werden 50 g/m² einer 20 Gew.-% Kolophoniumester-Klebharz modifizierten Polyacrylatklebmasse aus der Lösung auf ein einseitig silikonisiertes 90 g/m² Kraftpapier beschichtet. Nach dem Verdunsten des Lösungsmittels wird die Klebmasse 10 Minuten bei 120 °C vernetzt.

Zur Fertigstellung des Klebebandes wird das mit Klebmasse beschichtete Silikonpapier auf die weiß hinterlegte Oberschicht so aufkaschiert, daß die Klebmasse auf die mit TiO₂ pigmentierte Schicht trifft. Die als Prozeßfolie dienende Polyesterfolie wird wieder abgezogen.

## Patentansprüche

1. Langnachleuchtendes Klebeband
bestehend aus
a) einer ersten Schicht aliphatischem Polyurethanacrylat oder Polyesteracrylat, die einen hohen Grad an dreidimensionaler Vernetzung aufweisen und in die zu einem Anteil von 40 Gew.-% bis 80 Gew.-%, ein langnachleuchtendes Pigment eingearbeitet ist,
b) einer zweiten Schicht enthaltend ein Weißpigment und
c) einer dritten Schicht aus einer alterungsbeständigen Selbstklebemasse oder einer thermisch aktivierbaren Klebfolie.

2. Langnachleuchtendes Klebeband nach Anspruch 1, dadurch gekennzeichnet, daß auf der dritten Schicht aus einer alterungsbeständigen Selbstklebemasse oder einer thermisch aktivierten Klebfolie eine vierte Schicht aus einem antiadhäsiv beschichteten Trennmaterial aufgebracht ist.

3. Langnachleuchtendes Klebeband nach Anspruch 1, dadurch gekennzeichnet, daß in der ersten Schicht zu einem Anteil von 75 Gew.-% das langnachleuchtende Pigment eingearbeitet ist.

4. Langnachleuchtendes Klebeband nach Anspruch 1, dadurch gekennzeichnet, daß die erste Schicht eine Dicke von 200 µm bis 800 µm, vorzugsweise 500 µm aufweist.

5. Langnachleuchtendes Klebeband nach Anspruch 1, dadurch gekennzeichnet, daß die zweite Schicht aus einem aliphatischen Polyurethanacrylat besteht mit einem Anteil Weißpigment von 20 Gew.-% bis 45 Gew.-%.

6. Langnachleuchtendes Klebeband nach Anspruch 1, dadurch gekennzeichnet, daß die zweite Schicht aus einem Primer besteht mit einem Anteil Weißpigment von 60 Gew.-% bis 80 Gew.-%.

7. Langnachleuchtendes Klebeband nach Anspruch 1, dadurch gekennzeichnet, daß die zweite Schicht aus einer weißen Druckfarbe besteht.

8. Langnachleuchtendes Klebeband nach Anspruch 1, dadurch gekennzeichnet, daß die zweite Schicht eine Dicke von 30 µm bis 150 µm aufweist.

9. Langnachleuchtendes Klebeband nach Anspruch 1, dadurch gekennzeichnet, daß die erste Schicht und/oder die zweite Schicht und/oder die Schicht ein Flammschutzmittel zu einem Anteil von 0 Gew.-% bis 30 Gew.-% enthalten.

10. Langnachleuchtendes Klebeband
bestehend aus
a) einer ersten Schicht aliphatischem Polyurethanacrylat oder Polyesteracrylat, die einen hohen Grad an dreidimensionaler Vernetzung aufweisen und in die zu einem Anteil von 40 Gew.-% bis 80 Gew.-%, ein langnachleuchtendes Pigment eingearbeitet ist,
b) einer weiteren Schicht aus einer alterungsbeständigen Selbstklebemasse mit einem Anteil Weißpigment von 0,05 Gew.-% bis 10 Gew.-%.

11. Langnachleuchtendes Klebeband nach Anspruch 10, dadurch gekennzeichnet, daß die erste Schicht eine Dicke von 200 µm bis 800 µm, vorzugsweise 500 µm aufweist.

12. Langnachleuchtendes Klebeband nach Anspruch 10, dadurch gekennzeichnet, daß in der ersten Schicht zu einem Anteil von 75 Gew.-%, das langnachleuchtende Pigment eingearbeitet ist.

13. Langnachleuchtendes Klebeband nach Anspruch 10, dadurch gekennzeichnet, daß die Schicht aus einer alterungsbeständigen Selbstklebemasse mit einem Anteil Weißpigment von 0,8 Gew.-% bis 2 Gew.-% gebildet ist.

14. Langnachleuchtendes Klebeband nach Anspruch 10, dadurch gekennzeichnet, daß die erste Schicht und/oder die weitere Schicht ein Flammschutzmittel zu einem Anteil von 0 Gew.-%, bis 30 Gew.-% enthalten.

15. Verwendung eines langnachleuchtenden Klebebandes nach Ansprüchen 1 bis 10 zur Sicherheitskennzeichnung von Fluchtwegen oder Notausgängen.

16. Verwendung eines langnachleuchtenden Klebebandes nach Ansprüchen 1 bis 10 zur Sicherheitskennzeichnung von Fluchtwegen oder Notausgängen auf Schiffen oder innerhalb von Gebäuden.

## Claims

1. Long-afterglow adhesive tape consisting of
a) a first layer of aliphatic polyurethane acrylate or polyester acrylate which have [sic] a high degree of three-dimensional crosslinking and in which a long-afterglow pigment is incorporated in a proportion of from 40 % by weight to 80 % by weight, and
b) a second layer containing a white pigment, and
c) a third layer comprising an ageing-resistant self-adhesive composition or a heat-activatable adhesive film.

2. Long-afterglow adhesive tape according to Claim 1, characterized in that a fourth layer comprising a release material having an antiadhesive coating is applied to the third layer comprising an ageing-resistant self-adhesive composition or a heat-activated adhesive film.

3. Long-afterglow adhesive tape according to Claim 1, characterized in that the long-afterglow pigment is incorporated in the first layer in a proportion of 75 % by weight.

4. Long-afterglow adhesive tape according to Claim 1, characterized in that the first layer has a thickness of from 200 µm to 800 µm, preferably 500 µm.

5. Long-afterglow adhesive tape according to Claim 1, characterized in that the second layer consists of an aliphatic polyurethane acrylate with a proportion of white pigment of from 20 % by weight to 45 % by weight.

6. Long-afterglow adhesive tape according to Claim 1, characterized in that the second layer consists of a primer with a proportion of white pigment of from 60 % by weight to 80 % by weight.

7. Long-afterglow adhesive tape according to Claim 1, characterized in that the second layer consists of a white printing ink.

8. Long-afterglow adhesive tape according to Claim 1, characterized in that the second layer has a thickness of from 30 µm to 150 µm.

9. Long-afterglow adhesive tape according to Claim 1, characterized in that the first layer and/or the second layer and/or the [lacuna] layer comprise a flameproofing agent in a proportion of from 0 % by weight to 30 % by weight.

10. Long-afterglow adhesive tape consisting of
a) a first layer of aliphatic polyurethane acrylate or polyester acrylate which have [sic] a high degree of three-dimensional crosslinking and in which a long-afterglow pigment is incorporated in a proportion of from 40 % by weight to 80 % by weight,
b) a further layer comprising an ageing-resistant self-adhesive composition having a proportion of white pigment of from 0.05 % by weight to 10 % by weight.

11. Long-afterglow adhesive tape according to Claim 10, characterized in that the first layer has a thickness of from 200 µm to 800 µm, preferably 500 µm.

12. Long-afterglow adhesive tape according to Claim 10, characterized in that the long-afterglow pigment is incorporated in the first layer in a proportion of 75 % by weight.

13. Long-afterglow adhesive tape according to Claim 10, characterized in that the layer comprising an ageing-resistant self-adhesive composition is formed with a proportion of white pigment of from 0.8 % by weight to 2 % by weight.

14. Long-afterglow adhesive tape according to Claim 10, characterized in that the first layer and/or the further layer contain/contains a flame retardant in a proportion of from 0 % by weight to 30 % by weight.

15. Use of a long-afterglow adhesive tape according to Claims 1 to 10 for the safety marking of escape routes or emergency exits.

16. Use of a long-afterglow adhesive tape according to Claims 1 to 10 for the safety marking of escape routes or emergency exits on ships or within buildings.

## Revendications

1. Bande adhésive à longue luminescence constituée de :
a) une première couche de polyuréthanneacrylate ou de polyesteracrylate, qui présentent un degré élevé de réticulation tridimensionnelle et dans lesquelles est incorporé un pigment à longue luminescence dans une proportion de 40% en poids à 80% en poids;
b) une deuxième couche contenant un pigment blanc, et
c) une troisième couche d'une substance auto-adhésive résistante au vieillissement ou d'une feuille adhésive thermo-activable.

2. Bande adhésive à longue luminescence suivant la revendication 1, caractérisée en ce que, sur la troisième couche d'une substance auto-adhésive résistante au vieillissement ou d'une feuille adhésive thermo-activable, une quatrième couche d'un matériau de séparation recouvert d'anti-adhésif est appliquée.

3. Bande adhésive à longue luminescence suivant la revendication 1, caractérisée en ce que dans la première couche est incorporé le pigment à longue luminescence dans une proportion de 75% en poids.

4. Bande adhésive à longue luminescence suivant la revendication 1, caractérisée en ce que la première couche présente une épaisseur de 200 µm à 800 µm, de préférence 500 µm.

5. Bande adhésive à longue luminescence suivant la revendication 1, caractérisée en ce que la deuxième couche est constituée d'un polyuréthanneacrylate aliphatique avec une proportion de pigment blanc de 20% en poids à 45% en poids.

6. Bande adhésive à longue luminescence suivant la revendication 1, caractérisée en ce que la deuxième couche est constituée d'une couche de fond avec une proportion de pigment blanc de 60% en poids à 80% en poids.

7. Bande adhésive à longue luminescence suivant la revendication 1, caractérisée en ce que la deuxième couche est constituée d'une encre d'imprimerie blanche.

8. Bande adhésive à longue luminescence suivant la revendication 1, caractérisée en ce que la deuxième couche présente une épaisseur de 30 µm à 150 µm.

9. Bande adhésive à longue luminescence suivant la revendication 1, caractérisée en ce que la première couche et/ou la deuxième couche et/ou la couche contiennent un ignifugeant dans une proportion de 0% en poids à 30% en poids.

10. Bande adhésive à longue luminescence constituée de :
a) une première couche de polyuréthanneacrylate aliphatique ou de polyesteracrylate, qui présente un degré élevé de réticulation tridimensionnelle et dans laquelle est incorporé un pigment à longue luminescence dans une proportion de 40% en poids à 80% en poids, et
b) une autre couche d'une substance auto-adhésive résistante au vieillissement avec une proportion en pigment blanc de 0,05% en poids à 10% en poids.

11. Bande adhésive à longue luminescence suivant la revendication 10, caractérisée en ce que la première couche présente une épaisseur de 200 µm à 800 µm, de préférence 500 µm.

12. Bande adhésive à longue luminescence suivant la revendication 10, caractérisée en ce que dans la première couche est incorporé le pigment à longue luminescence dans une proportion de 75% en poids.

13. Bande adhésive à longue luminescence suivant la revendication 10, caractérisée en ce que la couche est formée d'une substance auto-adhésive résistante au vieillissement, avec une proportion en pigment blanc de 0,8% en poids à 2% en poids.

14. Bande adhésive à longue luminescence suivant la revendication 10, caractérisée en ce que la première couche et/ou l'autre couche contiennent un ignifugeant dans une proportion de 0% en poids à 30% en poids.

15. Utilisation d'une bande adhésive à longue luminescence suivant les revendications 1 à 10 pour le marquage de sécurité de passages de fuite ou de sorties de secours.

16. Utilisation d'une bande adhésive à longue luminescence suivant tes revendications 1 à 10 pour le marquage de sécurité de passages de fuite ou de sorties de secours sur des navires ou à l'intérieur de bâtiments.
